(19) Europäisches Patentamt / European Patent Office / Office européen des brevets

(11) **EP 4 277 951 B1**

(12) **EUROPEAN PATENT SPECIFICATION**

(45) Date of publication and mention
of the grant of the patent:
**30.04.2025  Bulletin 2025/18**

(21) Application number: **22701358.8**

(22) Date of filing: **18.01.2022**

(51) International Patent Classification (IPC):
*C08L 61/02* (2006.01)     *C08K 3/26* (2006.01)
*C08K 5/06* (2006.01)     *C08L 61/34* (2006.01)
*C08K 5/05* (2006.01)     *C08L 61/06* (2006.01)
*C09D 161/06* (2006.01)     *C09D 161/34* (2006.01)

(52) Cooperative Patent Classification (CPC):
**C08L 61/06; C08L 61/34; C09D 161/06;
C09D 161/34;** C08K 2003/265

(86) International application number:
**PCT/EP2022/051049**

(87) International publication number:
**WO 2022/152946 (21.07.2022 Gazette 2022/29)**

(54) **PHENOL FORMALDEHYDE RESIN FORMULATION AND ADHESIVE FOR CURTAIN COATING**

PHENOLFORMALDEHYDHARZFORMULIERUNG UND KLEBSTOFF FÜR
VORHANGBESCHICHTUNG

FORMULATION ET ADHÉSIF DE RÉSINE PHÉNOL FORMALDÉHYDE POUR LE REVÊTEMENT DE
RIDEAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2021  EP 21382033**

(43) Date of publication of application:
**22.11.2023  Bulletin 2023/47**

(73) Proprietor: **FORESA TECHNOLOGIES, S.L.U.
36650 Caldas de Reis Pontevedra (ES)**

(72) Inventor: **VILLAVERDE DIOS, Patricia
36650 Caldas de Reis (PONTEVEDRA) (ES)**

(74) Representative: **Balder IP Law, S.L.
Paseo de la Castellana 93
5ª planta
28046 Madrid (ES)**

(56) References cited:
US-A- 4 961 795     US-A- 6 132 549
US-A1- 2016 009 967

**EP 4 277 951 B1**

## Description

### TECHNICAL FIELD

The present invention relates to a phenol formaldehyde resin formulation, an adhesive comprising the same suitable for curtain coating and a process for manufacturing the phenol formaldehyde resin formulation. The present invention also relates to a process for manufacturing a coated material by applying said adhesive by curtain coating, to a coated material, in particular plywood, veneered board or laminated veneer lumber (LVL), obtainable or obtained by said process and to a coated material, in particular plywood, veneered board or laminated veneer lumber (LVL), comprising the adhesive of the invention.

### STATE OF THE ART

Curtain coating has been used for coating substrates, e.g., lignoceullulosic substrates such as sheets of wood, because it allows for an increase in production rates and the same time allows for a reduction of the amount of coating material per square meter of the substrate. Curtain coating provides a curtain of the coating material, and a substrate is driven through said curtain, whereby a controlled amount of coating material can be applied onto the surface of the substrate in order to obtain the desired properties of the final product using a minimal amount of coating material. This offers an advantage over other coating methods such as roller coating, wherein the substrate passes through rolls impregnated with the coating material and wherein the amount of coating material being applied onto the substrate is hard to control due to the pressure applied onto the substrate passing through the rolls.

However, not all coating formulations are suitable for curtain coating. In particular, some resin adhesive formulations fail to provide a homogeneous and continuous curtain due to inappropriate rheological properties and viscosity of the coating formulations, such as materials or formulations having pseudoplastic behavior. This can result in breaks in the curtain and defects in the coated product, e.g., resulting in portions of the substrate surface which are not provided with the coating. In order to solve such problems, the amount of coating material used for forming the curtain may be increased, which ultimately increases the amount of coating applied to the substrate, thereby eliminating one of the main advantages of curtain coating, which is the reduction of the amount of coating material that is applied to the substrate.

Phenol formaldehyde resins (also referred to as phenolic resins) are commonly used in adhesive formulations and are resins of choice for coating substrates such as lignocellulosic substrates, e.g., sheets of wood or wood veneers. In particular, phenol formaldehyde resins may be used in the preparation of coated materials such as plywood. They may also be used in the preparation of other coated materials such as veneered board or laminated veneer lumber (LVL).

Given the advantages of curtain coating there is an interest in applying phenolic resins by curtain coating.

Some documents describe phenolic resin formulations that may be applied using curtain coating.

For instance, GB 1,075,893 describes a process of bonding surfaces, such as a wood veneer to a sheet of hardboard, or to a number of wood veneers to form a plywood panel, comprising applying separately and successively to at least one of the surfaces to be bonded, first, a spray coating of a liquid hardenable resinous component, and second, a component comprising a powder hardener for the liquid resinous component and, optionally, a filler, bringing the surfaces together and allowing the composition to dry. The liquid resinous component may be a phenol formaldehyde resin and the powder component include both a filler and hardener, such as wood-flour, slate-flour, wheat-flour, starch, clay, calcium sulphate, chalk as the filler and, as the hardener, ammonium salt which may have added to it citric acid, oxalic acid, tartaric acid, aluminium sulphate, magnesium silicofluoride or the like. A curtain coater is used to apply the liquid resinous component and the powder component is applied by a vibrating screen. A slow acting hardener may be incorporated in the resinous component as well as a rapid acting hardener in the powder component. However, the methods described require applying different components to the substrate separately which adds complexity to the coating process.

US 4 758 478 A and US 5 074 946 A describe potassium-modified phenolic resins (also referred to as resol resins) with a significant improvement in cure speed without loss of flowability. These resins are described to act as though they were lower molecular weight condensation products. Reduced application rates are possible. The combination of faster cure and lower application rates is described to allow such resins to be used as effective adhesives for plywood, for example, with veneer and interior plies having a higher moisture content than was previously possible. Generally, resins according to the invention may contain from about 1% to about 15%, and preferably from about 1% to about 7% by weight, of potassium hydroxide, or more. The KOH-modified resole resins are described to be applied to the wood by conventional equipment including curtain coaters among others such as roll coaters.

CA1076730 A1 describes a liquid adhesive composition for use in adhesive applicators of the curtain-coating class, such as are used in coating plywood veneers in the manufacture of plywood, comprising: an aqueous, alkaline phenol-aldehyde resinous adhesive, a filler, and a minor proportion of 2,4,7,9-tetramethyl-5-decyne-4,7-diol, or of the ethylene glycol-, propylene glycol-, and butylene glycol-ethers thereof having from 1 to 10 mols of glycol per mol of diol. The diol or diol ether serves the function of improving the curtain forming qualities of the adhesive composition. In particular, its inclusion in the composition insures curtain uniformity, i.e., the absence of curtain breaks and tears, and uniform spread on the substrate.

US 2005/257888 A1 describes adhesive compositions and methods of using the compositions in the production of laminated veneer lumber (LVL). The adhesive compositions comprise a thermosetting phenol-aldehyde resin having at least one of (A) a number average molecular weight (Mn) of at least about 450, (B) a weight average molecular weight (Mw) of at least about 2000, and (C) a Z-average molecular weight (Mz) of at least about 6000, wherein said Mn, Mw, and Mz are measured using gel permeation chromatography (GPC), a ketone-aldehyde resin cure promoter, and optionally other components (e.g., a tack-promoter or a catalyst). The adhesive compositions minimize or eliminate the art-recognized problems of glue line dryout and steam blowout, associated with LVL manufacture from both low-moisture veneers and high-moisture veneers, respectively. Furthermore, the adhesive compositions provide fast tack-build and curing as well as ultimately good bonding characteristics. Curtain coating may be used.

US 3 931 070 A describes phenolic plywood adhesive containing lignosulfonates and a trialkyl phosphate having alkyl substituents of from 1 to 6 carbon atoms for use in a curtain coater.

Even though several phenol formaldehyde formulations have been described which may be applied by curtain coating, there is still need for a phenol formaldehyde resin formulation which allows the application of phenol formaldehyde resin adhesives by curtain coating without resulting in breaks on the curtain and without compromising the good adhesion properties of the final product.

## BRIEF DESCRIPTION OF THE INVENTION

A phenol formaldehyde resin formulation has been found which has appropriate rheological and viscosity properties which allow for the formulation of an adhesive which advantageously can be applied by curtain coating. The formulation allows for the adhesive to be applied by curtain coating in controlled amounts and to provide lower amounts of coating that can be achieved by, e.g., roller coating. Furthermore, such phenol formaldehyde resin formulations have been found to provide coated materials, such as plywood, which typically display good adhesion properties (e.g. Class III bonding quality rating according to EN 314-1:2004 and to EN 314-2: 1993 (confirmed in 2013) European Standards. Such formulations have also been found to provide coated materials that have good formaldehyde emission properties (e.g. to have an E-1 formaldehyde emissions rating according to EN 636:2012+A1:2015 European Standard, and/or to be Title VI compliant according to the Toxic Substances Control Act (TSCA) of the United States, and/or even to have a three star rating or four star rating according to the Japanese Industrial Standard JIS 1460:2015).

Furthermore, phenol formaldehyde resin formulations as described herein have been found to have relatively high molecular weights which provide for relatively short curing times which are advantageous for applications, such as plywood manufacture, wherein pressing times may be reduced.

In particular, a first aspect of the invention relates to a resin formulation comprising:

- a phenol formaldehyde resin

  ∘ having a formaldehyde to phenol molar ratio from 1.8:1 to 2.8:1
  ∘ having an average molecular weight (Mw) from 2500 to 4000 Da and a molecular weight distribution from 100 to 25000 Da,
  ∘ wherein from 7 to 10 wt.% of the phenol formaldehyde resin has a Mw above 8000 Da, and from 25 to 35 wt.% of the phenol formaldehyde resin has a Mw from 1000 to 4000 Da, as determined by gel permeation chromatography (GPC);

  wherein the resin formulation has a solids content from 45 to 60 wt.%, based on the total weight of resin formulation; as determined according to ISO 8618:1995.
  Additional aspects of the invention relate to an adhesive comprising

    from 50 to 90 wt.% of said resin formulation;
    from 10 to 30 wt.% of a filler, said filler comprising from 10 to 90 wt.% of an organic filler and from 90 to 10 wt.% of an inorganic filler; and
    from 2 to 25 wt.% of water

wherein the adhesive has a viscosity from 0.5 to 2 Pa*s and a solids content from 25 to 65 wt.%, the wt.% based on the total amount of adhesive.

Several additional aspects of the invention relate to

    a process for manufacturing said resin formulation;

a use of said adhesive in curtain coating;

a process for manufacturing a coated material comprising applying said adhesive on to a substrate, wherein the adhesive is applied by curtain coating;

a coated material, e.g., plywood, veneered board or laminated veneer lumber (LVL), obtainable by or obtained by such a process; and

a coated material comprising said adhesive, in particular wherein the coated material is selected from plywood, veneered board or laminated veneer lumber (LVL).

These and other aspects of the invention are further described in the detailed description of the invention, here below.

## BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure1: GPC curve for resin formulation C (solid line) and comparative resin formulation D (dotted line) of example 1.
Figure 2: Rheological profile for the curing of resin formulation C (solid line) comparative resin formulation D (dotted line) of example 2.

## DETAILED DESCRIPTION OF THE INVENTION

The instant invention relates to a resin formulation comprising:

-   a phenol formaldehyde resin

    ○ having a formaldehyde to phenol molar ratio from 1.8:1 to 2.8:1
    ○ having an average molecular weight (Mw) from 2500 to 4000 Da and a molecular weight distribution from 100 to 25000 Da,
    ○ wherein from 7 to 10 wt.% of the phenol formaldehyde resin has a Mw above 8000 Da, and from 25 to 35 wt.% of the phenol formaldehyde resin has a Mw from 1000 to 4000 Da, as determined by gel permeation chromatography (GPC);

wherein the resin formulation has a solids content from 45 to 60 wt.%, based on the total weight of resin formulation; as determined according to ISO 8618:1995 and a) a viscosity from 0.5 Pa*s to 0.7 Pa*s measured at 25 °C using a viscometer.

Phenol formaldehyde resins are commonly used in adhesive formulations and are known to a skilled person. Phenol formaldehyde resins may be typically characterized by the proportion of the different monomers conforming the resins.

Phenol formaldehyde resins used in resin formulations as described herein have a formaldehyde to phenol molar ratio from 1.8:1 to 2.8:1. The proportion of formaldehyde to phenol may be determined taking into account the total molar amount of formaldehyde and phenol used in the preparation of the resins. In several embodiments, the formaldehyde to phenol molar ratio may be from 2.0:1 to 2.5:1.

It has been found that resins with such proportion of formaldehyde to phenol allows for the formulation of adhesives which typically result in products (e.g., coated materials) with (relatively) low emissions of free formaldehyde. In particular, may provide coated materials with an E-1 formaldehyde emissions rating according to EN 636:2012+A1:2015 European Standard, and/or which are Title VI compliant according to the Toxic Substances Control Act (TSCA) of the United States, and/or even have a three star rating or four star rating according to the Japanese Industrial Standard JIS 1460:2015).

Phenol formaldehyde resins used in resin formulations as described herein have an average molecular weight (Mw) from 2500 to 4000 Da and a molecular weight distribution from 100 to 25000 Da, wherein from 7 to 10 wt.% of the phenol formaldehyde resin has a Mw above 8000 Da, as determined by gel permeation chromatography (GPC). The presence of such high molecular weights advantageously provides resin formulations with relatively short curing times which are advantageous for applications, such as plywood manufacture, wherein pressing times may be reduced. Higher percentages of high molecular weights would adversely have a viscosity which would be too high for curtain coating and would adversely have a low stability which would difficult handling of the resin.

Phenol formaldehyde resins used in resin formulations as described herein further have from 25 to 35 wt.% of the phenol formaldehyde resin having molecular weights from 1000 to 4000 Da. The presence of such amounts of intermediate molecular wights may advantageously provide resin formulations which result in adhesives with desirable tack which allow for a relatively long assembly time.

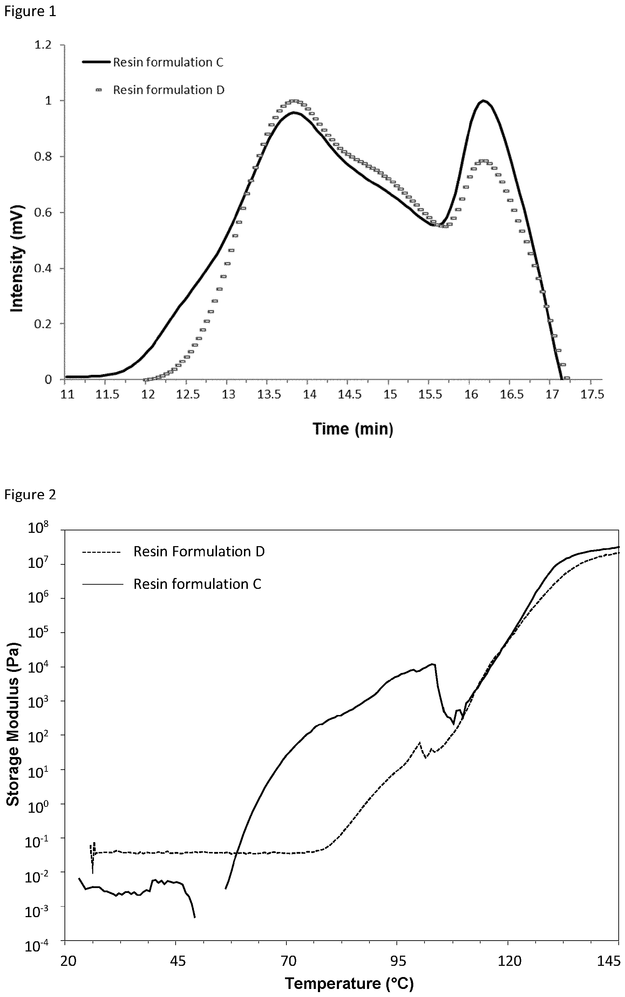

The Mw and the molecular weight distribution as well as the wt.% of resin having a specific Mw are determined by GPC. GPC is a common method for the determination of the molecular weight of polymeric materials and needs no further elucidation here. For instance, a GPC Refractive Index (RI) detector may be used (such as a Waters RI detector for GPC). Specific conditions that may be mentioned as an example are, e.g., the use of DMF as a solvent at a flow rate of 1 mL/min. A double column for low (e.g., a range of 0-1000 Da) and high molecular weights (e.g., a range of 50-100000 Da) may be used. Suitable calibration standards are known in the art. For instance, a polyethylene glycol (PEG) calibration standard may be used. A GPC curve for a resin as described herein will first show the polymer chains of higher molecular weight (which have lower retention times) and will later show polymer chains with lower molecular weight (which have a higher retention time). As a mode of example GPC curves for resin formulations prepared according to the examples are shown in Figure 1.

An average molecular weight (Mw) from 2500 to 4000 Da, has a meaning as commonly understood in the art. In particular, the average molecular weight (Mw) is also known as the weight average molecular weight and is defined by the following formula:

$$Mw = \frac{\sum N_i M_i^2}{\sum N_i M_i}$$ , where Mi is the molecular weight of a chain and Ni is the number of chains of that molecular weight.

The Mw can be determined by GPC as indicated above. Typically, a commercial GPC apparatus and software can automatically provide the Mw for an analyzed sample. An example of a suitable commercial software may be EMPOWER™ software from WATERS.

The average molecular weight (Mw) is distinct from the wt.% of resin having a specific molecular weight as defined above and below. The average molecular weight (Mw) is also distinct from the number average molecular weight (Mn). Compared to the Mn, the Mw takes into account the molecular weight of a chain in determining contributions to the molecular weight average. The more massive the chain, the more the chain contributes to Mw.

In particular, the weight average molecular weight may be from 2500 to 3500 Da, and more in particular from 2750 to 3250 Da.

A molecular weight distribution from 100 to 25000 Da is used herein to indicate that the polymeric chains of the phenol formaldehyde resin have a minimum molecular weight of at least 100 Da and a maximum molecular weight of at most 25000 Da, as evidenced by GPC. In particular, a GPC curve obtained for a phenol formaldehyde resin as described herein may start at an elution time for polymeric chains of at most 25000 Da and end at an elution time for polymeric chains of at least 100 Da. As a mode of example molecular weight distribution curves from resins as described herein and obtained in the examples (e.g., resin formulation C and comparative resin formulation D of example 1) are included in Figure 1. As it can be seen the curve starts at around 11 minutes of elution (which corresponds to the signal of polymeric chains of molecular weights of 24400 Da) and ends at around 17.2 minutes of elution (which corresponds to polymeric chains of molecular weights of 106 Da).

From 7 to 10 wt.% of the phenol formaldehyde resin has a molecular weight above 8000 Da, as determined by gel permeation chromatography (GPC).

From 25 to 35 wt.% of the phenol formaldehyde resin having molecular weights from 1000 to 4000 Da, as determined by gel permeation chromatography (GPC).

The wt.% of the resin having a molecular weight above 8000 Da or molecular weights from 1000 to 4000 Da is understood as the weight amount of the resin having polymer chains of a specific molecular weight in Da within the defined range.

For instance, the wt.% of resin having a specific molecular weight (above 8000 Da or from 1000 to 4000 Da) may be defined by

$$wt.\% \, (> 8000) = \frac{\sum N_{i(>8000)} M_{i(>8000)}}{\sum N_{i(total)} M_{i(total)}} * 100$$

$$wt.\% \, (1000 - 4000) = \frac{\sum N_{i(1000-4000)} M_{i(1000-4000)}}{\sum N_{i(total)} M_{i(total)}} * 100$$

where Mi is the molecular weight of a chain and Ni is the number of chains of that molecular weight, and >8000 indicates the molecular weights and chains which are above 8000 Da, total indicates all the molecular weights and chains of the sample and 1000-4000 indicate the molecular weights and chains which are within the range of from 1000 to 4000 Da.

Typically, a commercial GPC apparatus and software can automatically provide, for an analyzed sample, the wt.% of a sample having a specific molecular weight. As a mode of example, a suitable commercial software may be EMPOWER™ software from WATERS, which can provide for a given a molecular weight threshold or molecular weight range the wt.% of analyzed sample within that threshold (e.g., above 8000 Da) or range (e.g., from 1000 to 4000 Da).

Phenol formaldehyde resins used in resin formulations as described herein, may have a number average molecular weight (Mn) from 300 to 650 Da, in particular from 450 to 600 Da.

The Mn has a meaning as commonly understood in the art and is defined by the following formula:

$$Mn = \frac{\sum N_i M_i}{\sum N_i}$$

The Mn can also be determined by GPC as indicated above. Typically, a commercial GPC apparatus and software, such as EMPOWER™ software from WATERS, can provide the Mn for an analyzed sample.

Resin formulations as described herein may have a polydispersity index (PDI) defined as Mw/Mn, may typically be from 2.5 to 10 in particular from 3 to 7, more in particular from 4 to 6, and yet more in particular from 4.5 to 5.5. Such PDIs may be regarded as a consequence of the wt.% of the resin having a molecular weight above 8000 Da and molecular weights from 1000 to 4000 Da, as described above. However, not all resin formulations having such PDI will have a wt.% of the resin within the molecular weight ranges as described herein (i.e., from 7 to 10 wt.% above 8000 Da and from 25 to 35 wt.% from 1000 to 4000 Da).

As described above, the combination of high and medium molecular weights in a resin formulation as described herein, has advantageous properties for adhesive formulations comprising the same both with respect to the application of the formulations, e.g., by curtain coating, and with respect to the final properties of the products obtained thereby, as described in more detail below.

A resin formulation as described herein has a solids content from 45 to 60 wt.%, based on the total weight of resin formulation. In particular the solids content may be from 47 to 55 wt.%, more in particular of about 50 wt.%.

The solids content is defined as the amount of non-volatile matter contained in a formulation are evaporated under specified conditions of temperature and time, e.g., in a resin formulation. The solids content may be known by knowing the amounts of the different components present in the resin formulation. The solids content may also be determined by methods known in the art, e.g., according to ISO 8618:1995.

Resin formulations as described herein may comprise a surfactant mixture comprising an anionic surfactant and a non-ionic surfactant.

It has been found that such surfactant mixtures allow minimizing the flow rate at which the curtain is stable, thereby ultimately achieving low amounts of phenol formaldehyde resin being applied by curtain coting. This has not been achieved by other commonly used surfactants used on their own.

The surfactant mixture may be particularly present in a resin formulation as described herein in an amount from 1 to 3 wt.% based on the total amount of phenol formaldehyde resin.

The anionic surfactant of a surfactant mixture as described herein may be a salified alkyl phosphate, such as an organic ester of ortho-phosphoric acid which is at least partially salified. In particular, the alkyl phosphate may a mixture of be fully esterified phosphate, e.g., a phosphate comprising three alkylations, and fully salified phosphate or partially salified alkyl phosphate, i.e., a phosphate comprising a one to two alkylations and one to two alkali metal cations (e.g., potassium and/or sodium cations). The salified alkyl phosphate may also be partially salified or a mixture of partially salified alkyl phosphates, i.e., comprising one or more phosphates comprising one to two alkylations and one to two alkali metal cations (e.g. potassium and/or sodium cations). Specific examples of suitable salified alkyl phosphate anionic surfactants include, e.g., potassium cetyl phosphate, potassium C9-15 alkyl phosphate, potassium C11-15 alkyl phosphate, potassium C12-13 alkyl phosphate, potassium C12-14 alkyl phosphate, potassium lauryl phosphate, disodium lauryl phosphate, disodium oleyl phosphate, sodium lauryl phosphate.

The non-ionic surfactant of a surfactant mixture as described herein may be a glycol ether. In particular, the glycol ether may be a glycol ether of formula $R(OCH_2CH_2)_nOH$ wherein n = 1, 2 or 3 and R is an alkyl group. In particular, the R alkyl group may be selected from methyl, ethyl, propyl and butyl. More in particular, the glycol ether may be selected from 2-(2-butoxy-ethoxy)-ethanol, diethylene glycol monobutyl ether, diethylene glycol monoethyl ether, diethylene glycol monohexyl ether, diethylene glycol monomethyl ether, ethylene glycol monoethyl ether, ethylene glycol monohexyl ether, ethylene glycol monomethyl ether, ethylene glycol monooctyl ether, ethylene glycol monopropyl ether, triethylene glycol monoethyl ether, and triethylene glycol monomethyl ether. In particular embodiments, the glycol ether may be 2-(2-butoxy-ethoxy)-ethanol, also referred to as diethylene glycol monobutyl ether (DEGBE).

Said anionic surfactant may be typically present in the surfactant mixture in an amount of 1-10 wt.%, in particular from 1.0 to 7.5 wt.%, more in particular from 1.0 to 5.0 wt.%.

Said non-ionic surfactant may be typically present in the surfactant mixture in an amount from 1 to 40 wt.%, in particular from 5 to 30 wt.% more in particular from 10 to 20 wt.%, based on the total weight of the surfactant mixture. The remaining of the surfactant mixture may be an appropriate solvent, e.g., water.

A resin formulation as described herein may have from 40 to 50 wt.% of an aqueous solvent based on the total amount of phenol formaldehyde resin, said aqueous solvent comprising 90 to 98 wt.% of water and 2 to 10 wt.% of a C1-C3 linear or branched alcohol, based on the total weight of aqueous solvent, in particular 92 to 96 wt.% of water and 4 to 8 wt.% of the a C1-C3 linear or branched alcohol.

The presence of a C1-C3 linear or branched alcohol may advantageously confer an adequate viscosity for a phenol formaldehyde resin with a molecular weight as described herein in combination of a relatively high solids content, which in turn may result in adhesives with properties particularly adequate for curtain coating, e.g., particularly adequate fluidity. For instance, the alcohol may be selected from methanol, ethanol, propanol or isopropanol and may preferably be methanol.

A resin formulation as described herein may particularly have at least one of

a) a viscosity from 0.5 Pa*s to 0.7 Pa*s;
b) a pH from 10 to 13;
c) a free-formaldehyde content of less than 0.1 wt.%, as determined according to ISO 11402:2004;
d) a residual phenol content of less than 1 wt.% as determined according to ISO 8974:2002; and
e) a curing time at 100 °C of 15-30 minutes as determined according to ISO 9396:1997.

As indicated resin formulation as described herein may have a viscosity from 0.5 Pa*s to 0.7 Pa*s. The viscosity may be determined by methods known in the art. In particular, the viscosity may be measured at 25 °C using a viscometer, e.g., a Brookfield DV2T viscometer. Such viscosities advantageously may further facilitate handling of the resin formulation (e.g., its pumping) and the formulation of an adhesive for its application by curtain coating. Furthermore, such viscosities may further advantageously prevent the phenol formaldehyde resin itself from having a low penetration into the substrate onto which it is applied.

As indicated, a resin formulation as described herein may have a pH from 10 to 13. Such pH may advantageously provide formulations with a reactivity and water compatibility, which may further facilitate handling of the resin. A pH of the formulation outside of this range may adversely lower the reactivity of the resins.

A resin formulation as described herein may also advantageously have a free-formaldehyde content of less than 0.1 wt.%, as determined according to ISO 11402:2004, and a residual phenol content of less than 1 wt.% as determined according to ISO 8974:2002, in particular of less than 0.5 wt.% and more in particular of at most 0.2 wt.%. Surprisingly, such low formaldehyde and phenol contents allow the application of a resin formulation as described herein by curtain coating in adhesives as described herein, and at the same time achieve good adhesion properties of the final products to which it is applied.

A resin formulation as described herein may also advantageously have a curing time 100 °C of 15-30 minutes. The curing time is determined by methods known in the art. In particular, it may be determined according to ISO 9396:1997.

Such curing times may be generally obtained thanks to the combination of properties of the resin formulation and are optimal for the typical applications for phenol formaldehyde resins. For instance, in the manufacture of plywood, such curing times allow the application of the resin to a wood veneer and subsequent building of the stack of wood veneers followed by its compression to provide the final plywood products in a timeframe which is suitable for industrial application. Such advantages also apply to the manufacture of related coated materials such as veneered board or laminated veneer lumber (LVL).

A resin formulation as described herein typically has a) a viscosity from 0.5 Pa*s to 0.7 Pa*s, measured at 25 °C using a viscometer.

A resin formulation as described herein in addition to a) a viscosity from 0.5 Pa*s to 0.7 Pa*s may further have at least one of b) a pH from 10 to 13; c) a free-formaldehyde content of less than 0.1 wt.%, as determined according to ISO 11402:2004; d) a residual phenol content of less than 1 wt.% as determined according to ISO 8974:2002; and e) a curing time at 100 °C of 15-30 minutes as determined according to ISO 9396:1997.

In several embodiments, a resin formulation as described herein has a) a viscosity from 0.5 Pa*s to 0.7 Pa*s and may additionally have two or three of b), c), d) and e), as defined above.

In several embodiments, a resin formulation as described herein may particularly have all of a), b), c), d) and e).

A resin formulation as described herein may comprise from 0 to 10 wt.% of urea, based on the total amount of phenol formaldehyde resin, in particular, it may comprise from 1 to 5 wt.% of urea. The presence of a small amount of urea in phenol formaldehyde resins may be typically used in the art to, e.g., increase the solids content of the final formulation, to reduce formaldehyde emissions and/or to increase the plasticity of the resin formulation. However, the presence of urea in resin formulations as described herein is not necessary and it may be preferred that they have no urea. For instance, a urea content of 0 wt.% may be preferred. Nonetheless, since the presence of urea has been found not to detrimentally affect the properties of phenol formaldehyde resins as described herein, if desired, urea may also be used.

It has been surprisingly found that a phenol formaldehyde resin as described herein, in particular in combination with a surfactant mixture and optionally also a C1-C3 linear or branched alcohol as described herein, allows for a resin formulation with relatively high molecular weights in combination with a solids content and viscosity which provide an adhesive which can be advantageously applied by curtain coating without compromising the bonding properties of the final products. In particular, a resin formulation is provided adequate wettability fluidity and physical properties for curtain coating applications. More in particular, such resin formulations may be used in adhesives which result in coated products which have excellent bonding properties.

Accordingly, the instant invention further relates to an adhesive comprising from 50 to 90 wt.% (in particular from 60 to 80 wt.%) of a resin formulation as described herein; from 10 to 30 wt.% of a filler, said filler comprising from 10 to 90 wt.% of an organic filler and from 90 to 10 wt.% of an inorganic filler; and from 2 to 25 wt.% of water, wherein the adhesive has a viscosity from 0.5 to 2 Pa*s and a solids content from 25 to 65 wt.%, and wherein the wt.% is based on the total amount of adhesive.

A filler is present in an adhesive as described herein in an amount of from 10 to 30 wt.%, based on the total amount of adhesive. In particular, the filler may be present in an amount from 12 to 20 wt.%.

A filler as described herein comprises 10 to 90 wt.% of an organic filler and 10 to 90 wt.% of an inorganic filler, in particular 40 to 75 wt.% of an organic filler and 25 to 60 wt.% of an inorganic filler, more in particular 40 to 60 wt.% of an organic filler and 30 to 55 wt.% of an inorganic filler.

An organic filler may be selected from wheat flour, rye flour, olive stone flour, corn flour, coconut husk flour, wood flour, carbohydroxymethyllcellulose (CMC), xanthan gum and starch. An organic filler may preferably be selected from wheat flour, olive stone flour and wood flour.

An inorganic filler may be selected from calcium carbonate, sodium carbonate, potassium carbonate, chalk, barium sulfate, talcum powder, calcium sulfate and gypsum. An inorganic filler may preferably be calcium carbonate.

The presence of organic fillers in combination with inorganic fillers has been found to advantageously ensure that the adhesive has appropriate rheological properties to form and stabilize the curtain of adhesive during curtain coating and at the same time ensures that the phenol formaldehyde resin is evenly distributed on the surface of the coated substrate. This ultimately ensures good adhesion properties with a reduced amount of phenol formaldehyde resin, e.g., when compared to products obtained by other types of coating such as roller coating.

Water is present in an adhesive as described herein in order to provide a viscosity and a solids content to the adhesive which is suitable for curtain coating. Water is present in an amount from 2 to 25 wt.% is based on the total amount of adhesive, in particular water may be present in an amount from 5 to 15 wt.%. Lower or higher amounts of water generally result in curtains which are not stable or products with an excessive or a deficient amount of adhesive. An excessive amount of water would also be detrimental to the desired viscosity properties and on the properties of the final product, e.g., longer compression times or could cause bleeding of the surface boards in, e.g., a plywood, and/or blisters at different points of the board.

An adhesive as described herein has a viscosity from 0.5 to 2.0 Pa*s, in particular may have a viscosity from 0.6 to 2.0 Pa*s, in particular from 0.8 to 2.0 Pa*s. The viscosity may be measured as indicated above for the resin formulation.

An adhesive as described herein has a solids content is based on the total amount of adhesive from 25 to 65 wt.%, in particular from 30 to 55 wt.%. The solids content amount of the adhesive can be established as described above for the resin formulation.

An adhesive having a viscosity and a solids content amount of the resin formulation within these ranges has been found to advantageously provide a continuous curtain and to provide desired low amounts of a continuous coating on a substrate.

The instant invention further relates to a process for manufacturing a resin formulation as described herein comprising:

i) condensing formaldehyde and phenol at a condensation temperature from 60 to 90 °C and at a formaldehyde to phenol molar ratio from 1.8:1 to 2.8:1, to provide a phenol formaldehyde resin, wherein from 3.5 to 11.5 wt.% of alkali metal hydroxide is added in three or more separate fractions, wherein the weight percentages (wt.%) are based on the total weight amount of the resin formulation.

In a method as described herein, alkali metal hydroxide is added in three or more (e.g. 4 or 5) separate fractions in order to gradually increase the viscosity the phenol formaldehyde resin. The total amount of alkali metal hydroxide added is from 3.5 to 11.5 wt.% based on the total amount of a phenol formaldehyde resin.

Such sequential addition of alkali metal hydroxide has been found to advantageously allow obtaining resins with a relatively high molecular weight as defined herein and at the same time resin formulations with a relatively high solids content as also defined herein.

A process as described herein may further comprise ii) adding to the phenol formaldehyde resin from 1 to 3.0 wt.% of a surfactant mixture comprising an anionic surfactant and a non-ionic surfactant, the wt.% being based on the total amount of resin formulation. The addition of the surfactant mixture may be typically performed at the end of condensation or may also be performed during condensation. It may be preferred to add the surfactant mixture at the end of condensation or after condensation, e.g., during the cooling of the resin. For instance, addition may be performed at a temperature from 20 to 60 °C or from 30 to 40 °C or may be performed after cooling 12 to 30 °C.

In several embodiments, condensing (i) may be performed in the presence of from 1 to 3.0 wt.%, in particular from 1.5 to 2.99 wt.%, of a C1-C3 linear or branched alcohol and from 25 to 75 wt.% of water, based on the total weight amount of the resin formulation.

It has been surprisingly found that the addition of a C1-C3 linear or branched alcohol in the condensation step (i) may advantageously provide a resin formulation with a viscosity and solids content particularly suitable for use in adhesives comprising the same for curtain coating applications, without compromising the condensation of the resin or the bonding properties of the final products.

In several embodiments, a process as described herein may comprise adding to the phenol formaldehyde resin from 0 to 10 wt.% of urea, in particular from 1 to 5 wt.% of urea, based on the total weight amount of the resin formulation.

In several embodiments, in a process as described herein condensing (i) comprises:

a) mixing formaldehyde and phenol at a formaldehyde to phenol molar ratio from 1.8:1 to 2.8:1 together with from 1.5 to 2.99 wt.% of a C1-C3 linear or branched alcohol and from 25 to 75 wt.% of water, mixing being performed at a temperature from 30 to 50 °C, to provide a first reaction mixture;

b) cooling the first reaction mixture to a temperature below 30 °C, in particular from 15 to 25 °C, and adding from 1.5 to 3.5 wt.% of an alkali metal hydroxide, to provide a second reaction mixture;

c) heating the second reaction mixture to a temperature from 60 to 90 °C to provide a third reaction mixture, in particular, having a viscosity from 0.03 to 0.15 Pa*s, more in particular from 0.03 to 0.9 Pa*s,

d) cooling the third reaction mixture by 1 to 10 °C, and adding from 1 to 4 wt.% of the alkali metal hydroxide, to provide a fourth reaction mixture;

e) heating the fourth reaction mixture to a temperature from 60 to 90 °C, to provide a fifth reaction mixture, in particular having a viscosity from 0.09 to 0.30 Pa*s, more in particular from 0.15 to 0.25 Pa*s;

f) cooling the fifth reaction mixture by 5 to 10 °C, and adding from 1 to 4 wt.% alkali metal hydroxide, to provide a sixth reaction mixture;

g) heating the sixth reaction mixture to a temperature from 60 to 90 °C, to provide a phenol formaldehyde resin, in particular having a viscosity from 0.30 to 0.90 Pa*s, more in particular from 0.5 to 0.8 Pa*s; and

h) cooling the phenol formaldehyde resin to a temperature from 5 to 40 °C, more in particular from 12 to 30 °C,

wherein the weight percentages (wt.%) are based on the total weight amount of the resin formulation.

In processes as described herein the total amount of alkali metal hydroxide may be added sequentially as detailed. The gradual addition of sodium hydroxide allows for the gradual increase of viscosity, e.g., as also detailed. This has been found to allow reaching higher viscosities and higher molecular weights whilst at the same time reaching relatively high solids content.

Heating and cooling steps are typically used in phenol formaldehyde manufacture and need no further elucidation herein.

An alkali metal hydroxide used in processes as described herein may be selected from sodium hydroxide, potassium hydroxide, barium hydroxide, magnesium hydroxide, and zinc hydroxide and may preferably be selected from sodium hydroxide and potassium hydroxide.

A method as described herein provides resin formulations with a combination of properties that render them particularly suitable for curtain coating applications. As evidenced in the examples, formulations with the same monomer constituents obtained by other methods do not typically have such adequate properties. Accordingly, the instant invention further relates to resin formulations obtainable by or obtained by a method as described herein.

As indicated, resin formulations as described herein are advantageously used in adhesives, as also described above, for curtain coating applications.

Adhesives as described herein may be prepared with resin formulations as also described herein by methods known in the art.

The instant invention further relates to the use of an adhesive as described herein in curtain coating or for coating a substrate by curtain coating.

Accordingly, the instant invention also relates a process for manufacturing a coated material comprising applying an adhesive as described herein on to a substrate, wherein the adhesive is applied by curtain coating to an amount from 150 to 280 g/m$^2$ based on the amount of adhesive per square meter of substrate, to provide a curtain coated substrate.

Any substrate which may be desired to be coated with a phenol formaldehyde resin-based adhesive and may be suitably coated by curtain coating may be used. Examples of suitable substrates include, e.g., lignocellulosic substrates, metallic substrates or polymeric substrates. Lignocellulosic substrates, and in particular wood panels or wood veneers may be preferred. For instance, wood veneers, e.g., for plywood, may have a thickness from 0.3 to 3 mm, in particular from 0.5 to 2.5 mm, more in particular from 1 to 2 mm. Wood composites such as medium density fiberboards (MDF) may also be used as lignocellulosic substrates.

Curtain coating may be applied as commonly performed in the art. Curtain coating is achieved by providing a curtain of adhesive and allowing a substrate to be coated to pass through the curtain, e.g., by placing the substrate on a conveyor belt and letting it advance under the curtain of adhesive.

Advantageously a phenol formaldehyde resin formulation and an adhesive as described herein allow for the adhesive to be used in curtain coating systems or apparatus already being used in the art without the need of adapting them for a particular phenol formaldehyde resin formulation or adhesive as described herein. For instance, commercial curtain coaters may be used.

In particular, an adhesive as described herein may be applied by curtain coating to an amount from 150 to 280 $g/m^2$ based on the amount of adhesive per square meter of substrate, to provide a curtain coated substrate. The adhesive amount on the curtain coated substrate may be determined by weighing a substrate of a known surface area before and after coating.

Typically, the adhesive will be evenly distributed over the substrate and will cover 100% of the surface of the substrate. The distribution of the coating over the substrate can be determined visually.

The amount of adhesive may be regulated to provide a desired amount per surface of the substrate. In particular, the amount of adhesive may be regulated in a curtain coater by varying the flow of adhesive provided by the curtain and the speed at which the substrate goes through the curtain.

As a mode of example, a substrate may be passed through a curtain of adhesive at a speed, e.g., from 90 to 140 m/min, in particular from 100 to 130 m/min. For a specific flow of adhesive, higher speeds could reduce the amount of adhesive but may detrimentally result in areas of the substrate surface free of adhesive, lower speeds increased the amount of adhesive placed onto the surface substrate without providing additional benefits on, e.g., bonding properties and resulting in higher formaldehyde emissions.

It has been found that such adhesive amounts provide coated substrates which may be used to provide products with satisfactory adhesion properties whilst keeping the adhesive amounts low.

More in particular, the adhesive may be applied to an amount from 150 to 240 $g/m^2$, 160 to 220 $g/m^2$ or from 170 to 200 $g/m^2$.

The amount of adhesive applied may be chosen to meet specific needs of the final products wherein the coated substrate will be used. For instance, higher adhesive amounts within said ranges may be desired when a higher adhesion may be required.

The curtain coated substrate as such may be the coated material or the curtain coated substrate may be further processed to provide the coated material.

For instance, a process for manufacturing a coated material as described herein may further comprise pressing the curtain coated substrate at a temperature from 80 to 160°C, in particular from 90 to 150°C and more in particular from 100 to 140°C, and at a pressure from 0.4 to 2.0 MPa for a length of time from 0.4 to 3 minutes per mm of total thickness of the curtain coated substrate being pressed. Resin formulations as described herein have been found to advantageously provide adhesives which upon application by curtain coating allow relatively short pressing times which is advantageous in, e.g., plywood manufacture.

Pressing the curtain coated surface is performed to cure the phenol formaldehyde resin and to provide the coated material with desired bonding properties. The coated substrate may be compressed together with other coated substrates.

In a process for manufacturing a coated material as described herein the coated material may be selected from plywood, veneered board or laminated veneer lumber (LVL), and it may particularly be plywood.

Accordingly, the present invention further relates to coated material, obtainable by or obtained by a process for manufacturing a coated material as described herein. In particular, the coated material may be selected from plywood, veneered board or laminated veneer lumber (LVL), and more in particular the coated material may be plywood,

The process for manufacturing plywood, veneered board or laminated veneer lumber (LVL) as a coated material corresponds to processes typically used in the art with the exception that an adhesive comprising a phenol formaldehyde resin as described herein is applied by curtain coating.

For instance, a plywood may be obtained from an uneven number of wood veneers and the number of wood veneers and the nature of the wood will vary depending on the wishes for the final products. As a mode of example, the number of wood veneers may vary from 3 to 29, in particular from 5 to 25 and more in particular from 7 to 23 and the thickness of the wood veneers may be from 0.3 to 3 mm, in particular from 0.5 to 2.5 mm, more in particular from 1 to 2 mm.

A process for manufacturing plywood may generally comprise placing a first wood veneer in a conveyor belt, with the wood grain on a first direction, to allow the wood veneer to pass through a curtain of an adhesive, placing a subsequent wood veneer with the wood grain of the wood on the opposite direction to that first direction. Subsequent wood veneers are placed alternatively with the wood grain on the first direction and the wood grain on the opposite direction. The wood veneers are then placed on top of each other to provide a stack of wood veneers wherein adjacent wood veneers have the wood grain in opposite directions and with the surface of the wood veneer which is free of adhesive being placed on top of the surface containing adhesive of a previous wood veneer, until the last wood veneer is to be placed to obtain a stack of wood veneers of desired thickness. The last wood veneer to be placed on the stack is free of any adhesive.

The stack of wood veneers may be pressed at a temperature from 80 to 160°C, in particular from 90 to 150°C and more in particular from 100 to 140°C, and at a pressure from 0.4 to 2.0 MPa for a length of time from 0.4 to 3 minutes per mm of total thickness of the curtain coated substrate being pressed.

The stack of wood veneers may be directly submitted to such conditions or may have been submitted to a previous compression step wherein the stack of veneers is subjected to a pressure from 0.3 to 1 MPa, for 2 to 30 minutes at room temperature (e.g., at a temperature from 16 to 26 °C). Such previous compression step may advantageously prevent drying out of the resin and improve adhesion, particularly if compression cannot be performed immediately after stacking.

A plywood obtained by processes as described herein advantageously displays good bonding quality and acceptable or low formaldehyde emissions.

In particular, it has been found that methods as described herein can produce plywood with phenol formaldehyde resin-based adhesive which has good bonding properties with a low amount of adhesive being used.

For instance, a plywood may be obtained wherein wood veneers are adhered by an adhesive as described herein, wherein said plywood has a class III bonding quality rating according to EN 314-1:2004 and to EN 314-2: 1993 (confirmed in 2013) European Standards and has an E-1 formaldehyde emissions rating according to EN 636:2012+A1:2015 European Standard and/or is Title VI compliant according to the Toxic Substances Control Act (TSCA) of the United States, and/or has a three star rating or four star rating according to the Japanese Industrial Standard JIS 1460:2015).

In several further embodiments, the adhesive may be applied to one of the surfaces of a wood veneer to an amount from 150 to 280 g/m$^2$ as described above.

Other coated materials, such as veneered board or laminated veneer lumber (LVL), may also typically have such an amount of adhesive applied.

Accordingly, the instant invention also relates to a coated material, comprising an adhesive as described herein, in particular the coated material may be selected from plywood, veneered board or laminated veneer lumber (LVL), and more in particular the coated material may be plywood, yet more in particular a plywood with properties as described herein.

As indicated, the adhesive adhering wood veneers may be typically applied to one of the surfaces of the wood veneers. Even though methods applying adhesive to both surfaces of the wood veneers may be envisaged, in an industrial production of plywood, adhesive would typically only be applied to one surface.

As also indicated, the adhesive adhering wood veneers may be applied to an amount from 150 to 280 g/m$^2$, and it may be particularly applied to an amount from 150 to 240 g/m$^2$, from 160 to 220 g/m$^2$, or from 170 to 200 g/m$^2$. Amounts of phenol formaldehyde resin adhesive within the ranges described herein may be lower than those typically achieved with other coating methods such as roller coating.

Surprisingly, it has been found that coated materials such as plywood, comprising an adhesive as described herein display a good bonding quality. In particular, plywood products can be achieved displaying class III bonding quality rating according to EN 314-1:2004 and to EN 314-2: 1993 (confirmed in 2013) European Standards. The standards define the bond quality requirements for different applications and the testing conditions:

-    Bond Class III: Exterior conditions - unprotected exterior conditions over sustained periods.

This is equivalent to climatic conditions leading to a higher moisture content than would be suitable for bond class 2 environments.

It has also been found that phenol formaldehyde resin adhesives as described herein provide plywood products with acceptable or even low formaldehyde emissions. In particular, a plywood as described herein displays E-1 formaldehyde emissions rating according to EN 636:2012+A1:2015 European Standard and/or is Title VI compliant according to the Toxic Substances Control Act (TSCA) of the United States, and/or has a three star rating or four star rating according to the Japanese Industrial Standard JIS 1460:2015), a higher star rating meaning a lower formaldehyde emission.

Coated materials comprising phenol formaldehyde resin adhesives with such bonding and formaldehyde emission properties as described herein, have now been found possible by applying an adhesive as described herein by curtain coating as also described herein.

The instant invention is further illustrated with the following examples without being limited thereto or thereby.

**EXAMPLES**

**Example 1: Preparation of resin formulations**

The following reagents were used:

- commercially available formaldehyde,
- commercially available phenol,
- commercially available sodium hydroxide,
- a surfactant mixture comprising 1-5 wt.% of a salified alkyl phosphate as anionic surfactant and 10-20 wt.% of diethylene glycol monobutyl ether (DEGBE) as non-ionic surfactant,
- commercially available urea.

The following methods were used:

- Solids content: determined according to ISO 8618:1995
- Viscosity: the viscosity was measured at 25 °C using a Brookfield DV2T viscometer.
- Molecular weight: the Mw, the molecular weight distribution and the wt.% of resin having a specific Mw are determined by GPC using a double column for low and high molecular weights (with a range of 0-1000 Da and a range of 50-100000 Da), GPC Refractive Index (RI) detector, DMF as a solvent and a flow rate of 1 mL/min, using a suitable calibration standard such as a polyethylene glycol (PEG) calibration standard and an appropriate software such as EMPOWER™ software from WATERS.
- Free formaldehyde: determined according to ISO 11402:2004
- Residual phenol: determined according to ISO 8974:2002
- Curing time: determined according to ISO 9396:1997

**Resin formulation A** was obtained according to the following method.

398 g of a 55% solution of formaldehyde were added into a reactor followed by 381.1 g of phenol, 323.4 g of water and 37.5 g of methanol as the alcohol. The components were mixed and cooled to 25 °C.

Alkali metal hydroxide (selected from sodium hydroxide and potassium hydroxide, using a 50% solution in both cases) was added sequentially in three portions, as follows.

A first portion of 90 g of sodium hydroxide (Alkali 1) was added to the reactor and the mixture was heated up to 70°C. The reaction mixture was held at that temperature until the viscosity measured at 25°C was 0.06 Pa*s. When the viscosity was reached the mixture was cooled to 65°C and a second portion of 90 g of potassium hydroxide (Alkali 2) was added to the reactor. The mixture was heated again to 70°C and this temperature was held until the viscosity measured at 25°C was 0.2 Pa*s. When the viscosity was reached the mixture was cooled to 65°C and a third portion of 90 g of sodium hydroxide (Alkali 3) was added to the reactor. The reaction mixture was heated again to 70°C until the viscosity at 25°C was 0.8 Pa*s. Then the reaction mixture was cooled to 30°C and 75g of urea and 16 g of the surfactant mixture were added to the reactor. The mixture was further cooled to 15°C.

The resulting resin formulation comprised a combination of properties as indicated in table 2, including a phenol formaldehyde resin with combination of high and medium molecular weights, a solids content of 52 wt.%, a viscosity 0.65 Pa*s at 25° C and good fluidity for its formulation in an adhesive for curtain coating.

**Resin formulation B** was obtained according to the following method.

548.4 g of a 55% solution of formaldehyde were added into a reactor followed by 402.2 g of phenol and 32 g of ethanol as the alcohol. The components were mixed and cooled to 25 °C.

Sodium hydroxide was added sequentially in three portions, using a 50% solution of sodium hydroxide as follows.

A first portion of 48 g of sodium hydroxide (Alkali 1) was added to the reactor together with 401.1 g of water and the mixture was heated up to 90°C. The reaction mixture was held at that temperature until the viscosity measured at 25°C was 0.07 Pa*s. When the viscosity was reached the mixture was cooled to 80°C and a second portion of 80 g of sodium hydroxide (Alkali 2) was added to the reactor. The mixture was kept at 80°C until the viscosity measured at 25°C was 0.18 Pa*s. When the viscosity was reached the mixture was cooled to 75°C and a third portion of 64 g of sodium hydroxide (Alkali 3) was added to the reactor. The reaction mixture was kept at 75°C until the viscosity at 25°C was 0.55 Pa*s. Then the reaction mixture was cooled to 50°C and 24 g of the surfactant mixture were added to the reactor. The mixture was further cooled to 20°C.

The resulting resin formulation comprised a combination of properties as indicated in table 2, including a phenol formaldehyde resin with combination of high and medium molecular weights, a solids content of 48 wt.%, a viscosity of 0.57 Pa*s at 25° C and good fluidity for its formulation in an adhesive for curtain coating.

**Resin formulation C** was obtained according to the following method.

441.2 g of phenol were added into a reactor followed by 588.7 g of a 55% solution of formaldehyde and 52.2 g of methanol as the alcohol. The components were mixed and cooled to 25 °C.

Sodium hydroxide was added sequentially in three portions, using a 50% solution of sodium hydroxide, as follows:
A first portion of 72 g of potassium hydroxide (Alkali 1) was added to the reactor together with 384.9 g of water and the mixture was heated up to 80°C. The reaction mixture was held at that temperature until the viscosity measured at 25°C was 0.05 Pa*s. When the viscosity was reached the mixture was cooled to 75°C and a second portion of 90 g of potassium hydroxide (Alkali 2) was added to the reactor. The mixture was kept at 75°C until the viscosity measured at 25°C was 0.24 Pa*s. When the viscosity was reached the mixture was cooled to 75°C and a third portion of 90 g of potassium hydroxide (Alkali 3) was added to the reactor. The reaction mixture was kept at 75°C until the viscosity at 25°C was 0.7 Pa*s. Then the reaction mixture was cooled to 50°C and 54 g of urea was added to the reactor. The reaction mixture was further cooled to 40 °C and 27 g of the surfactant mixture were added to the reactor. The mixture was further cooled to 20°C.

The resulting resin formulation comprised a combination of properties as indicated in table 2, including a phenol formaldehyde resin with a combination of high and medium molecular weights, a solids content of 50 wt.%, a viscosity of 0.55 Pa*s at 25° C and good fluidity for its formulation in an adhesive for curtain coating.

**Comparative Resin formulations A-C** - addition of methanol at the end

Comparative resin formulations A-C were respectively prepared in the same way as resin formulations A-C, wherein the alcohol (methanol or ethanol as the case may be) is not added at the beginning of the preparation of the resin but is added at the end after cooling to 20 °C. The properties of the resin formulations obtained are detailed in Table 2.

**Comparative resin formulation D** - single addition of sodium hydroxide

343.2 g of phenol were added into a reactor followed by 457 g of a 55% solution of formaldehyde and 40.6 g of methanol as the alcohol. The components were mixed and cooled to 20 °C.

Sodium hydroxide was added in a single portion, using a 50% solution of sodium hydroxide, as follows.

A first and only portion of 196 g of sodium hydroxide (Alkali 1) was added to the reactor together with 299.3 g of water and the mixture was heated up to 80°C. The reaction mixture was held at that temperature until the viscosity measured at 25°C was 0.6 Pa*s. When the viscosity was reached the mixture was cooled to 50°C and 54 g of urea were added to the reactor. The reaction mixture was further cooled to 30 °C and 21 g of the surfactant mixture were added to the reactor. The mixture was further cooled to 20°C.

The resulting resin formulation comprised a combination of properties as indicated in table 2, including a phenol formaldehyde resin with a proportion of high and medium molecular weights outside of the ranges of the present invention, a solids content of 50 wt.%, a viscosity of 0.5 Pa*s at 25° C and high curing times.

Table 1 - Resin formulation composition

| Resin formulation | A & Comp A* | B & Comp B* | C & Comp C* | Comp D† |
|---|---|---|---|---|
| Formaldehyde (55% solution) | 398 g | 548.4 g | 588.7 g | 457 g |
| Phenol | 381.1 g | 402.2 g | 441.2 g | 343.2 g |
| Alcohol | 37.5 g | 32 g | 52.2 g | 40.6 g |
| Water | 323.4 g | 401.1 g | 384.9 g | 299.3 g |
| Alkali 1 | 90 g | 48 g | 72 g | 196 g |
| Alkali 2 | 90 g | 80 g | 90 g | - |
| Alkali 3 | 90 g | 64 g | 90 g | - |
| Surfactant mixture | 16 g | 24 g | 27 g | 21 g |
| Urea | 75 g | 0 g | 54 g | 54 g |
| *Comparative resin formulations A, B and C had the same composition with the difference that methanol was added at the end, after cooling to 20°C<br>† Resin formulation prepared using a single addition of NaOH | | | | |

Table 2 - Resin formulation properties

| Resin formulation | A | B | C | Comp A | Comp B | Comp C | Comp D |
|---|---|---|---|---|---|---|---|
| Viscosity (Pa*s) | 0.65 | 0.57 | 0.55 | 0.20 | 0.18 | 0.175 | 0.50 |
| Solids content (wt.%) | 52 | 48 | 50 | 51.8 | 48 | 49.7 | 50 |
| average Mw (Da) | 2600 | 3000 | 2750 | 2500 | 2940 | 2400 | 1900 |
| wt.% of resin Mw > 8000 Da | 7.9 | 9.1 | 8.6 | 7.9 | 8.7 | 7.5 | 4.0 |
| wt.% of resin Mw 1000-4000 Da. | 33.2 | 30 | 32.1 | 31 | 30.5 | 31.6 | 37 |
| pH | 12.5 | 11.0 | 11.8 | 12.4 | 11.0 | 11.7 | 12.4 |
| Free-formaldehyde (wt. %) | 0.01 | 0.04 | 0.01 | 0.01 | 0.04 | 0.01 | 0.01 |
| Residual phenol (wt.%) | 0.15 | 0.03 | 0.05 | 0.15 | 0.03 | 0.05 | 0.1 |
| Curing time (min) | 25 | 20 | 22 | 27 | 23 | 25 | 32 |

Table 2 Continuation - Other resin formulation properties

| Resin formulation | A | B | C | Comp A | Comp B | Comp C | Comp D |
|---|---|---|---|---|---|---|---|
| average Mn (Da) | 546 | 596 | 584 | 541 | 580 | 505 | 569 |
| PDI (Mw/Mn) | 4.76 | 5.03 | 4.71 | 4.62 | 5.08 | 4.75 | 3.34 |

Figure 1 shows the GPC curve for resin formulation C (solid line) and for the resin formulation D (dotted line).

As it can be seen the curve of formulation C starts at around 11 minutes of elution (which corresponds to the signal of polymeric chains of molecular weights of around 24400 Da) and ends at around 17.2 minutes of elution (which corresponds to of polymeric chains of molecular weights of around 106 Da). In contrast the curve of formulation D starts at 12 minutes of elution (which corresponds to the signal of polymeric chains of molecular weights of around 20000Da) and ends at the same elution time of around 17.2 minutes.

From comparing the two curves it can also be clearly seen that the population of high molecular chains for resin formulation C (i.e., above 8000 Da and therefore with retention times below 13 minutes) is considerably higher than for formulation D as also reflected in Table 2 above (with a calculated 8.6 wt.% above 8000 Da for formulation C vs a calculated 4.0 wt.% above 8000 Da for formulation D).

Further it can also be observed that the population of intermediate molecular weights, from 1000 to 4000 Da (i.e., from a retention time of 13.5 to 15.0 minutes) is also maintained high for formulation C (with a calculated value of 32.1 wt.%).

**Example 2: Preparation of adhesives:**

The resin formulations A-C and comparative resin formulations A-D of example 1 were used in the preparation of adhesives A-C and comparative adhesives A-D to be used in curtain coating.

For each adhesive the ingredients of Table 3 were mixed in the indicated proportions. The properties of the adhesives obtained are also indicated.

Table 3 - Adhesive composition and properties

| Adhesive | A | B | C | Comp A | Comp B | Comp C | Comp D |
|---|---|---|---|---|---|---|---|
| Resin formulation | A | B | C | Comp A | Comp B | Comp C | Comp D |
| Resin formulation amount | 100 g | 100 g | 100 g | 100 g | 100 g | 100 g | 100 g |
| Calcium carbonate | 11.5 g | 9.5 g | 10.5 g | 11.5 g | 9.5 g | 10.5 g | 11.5 g |
| Water | 11 g | 11 g | 14 g | 11 g | 11 g | 14 g | 11 g |
| Wheat flour | 6 g | 9 g | 8 g | 6 g | 9 g | 8 g | 6 g |
| Wood four | 3 g | 3 g | 4 g | 3 g | 3 g | 4 g | 3 g |
| Viscosity (Pa*s) | 0.9 | 1 | 1.05 | 0.6 | 0.55 | 0.5 | 0.9 |

(continued)

| Adhesive | A | B | C | Comp A | Comp B | Comp C | Comp D |
|---|---|---|---|---|---|---|---|
| Resin formulation | A | B | C | Comp A | Comp B | Comp C | Comp D |
| Solids content (wt.%) | 54.1 | 52 | 53.1 | 53.8 | 51.5 | 52.2 | 54 |

The curing of the resin formulation C and comparative resin formulation D, was monitored by rheology using a Discovery HR-2 Hybrid Rheometer (from TA Instruments) using the software Trios v5.

The rheological profiles obtained for the two resin formulations are shown in Figure 2. It was observed that adhesive comprising resin formulation C (with a higher wt.% of the resin having a molecular weight above 8000 than adhesives comprising comparative resin formulation D) showed a higher modulus at low temperatures (< 80°C), which is advantageous because it improves the adhesive properties during the process of preparation of the plywood, as the veneers have a more consistent behavior as they come out of the press. On the other hand, at the press temperature (120-140°C) the adhesive with resin formulation C is found to reach higher modulus values which is associated to good mechanical properties.

## Example 3: Preparation of plywood by curtain coating

The adhesives A-C and comparative adhesives A-D were used to manufacture plywood from wood veneers using a curtain coater as described below.

Comparative adhesives A-C were unsuited for application by curtain coating. When curtain coating was attempted for comparative adhesives A-C, due to the low viscosity and unsuited fluidity of the adhesives, the curtain of adhesive displayed breaks resulting in areas of the wood veneer surface lacking adhesive.

For obtaining a plywood of about 19 mm thickness starting from wood veneers of about 2.5 mm thickness a total of 9 plywood veneers were necessary.

8 of said 9 wood veneers having a surface of 500x500 mm were subjected to curtain coating with adhesives in A-C and comparative adhesive D in a curtain coater.

A first wood veneer was placed in the conveyor belt of the curtain coater, with the wood grain on a first direction, to allow the wood veneer to pass through the curtain of adhesive. The subsequent wood veneer was placed on the conveyor belt with the wood grain of the wood on the opposite direction to that first direction. Subsequent wood veneers were placed alternatively with the wood grain on the first direction and the wood grain on the opposite direction.

As the wood veneers were provided with the adhesive, they were placed on top of each other to provide a stack of 8 wood veneers wherein adjacent wood veneers have the wood grain in opposite directions.

A 9th wood veneer which was free of adhesive was placed on top of the surface containing adhesive of the last wood veneer of the stack, with the wood grain in the same direction as the first wood veneer of the stack.

The stack of wood veneers was then pressed at a temperature from 130°C, and at a pressure of 0.49 MPa for a length of time of 1 min per mm of the total thickness of the final plywood, i.e. 19 minutes.

For comparative adhesive D a higher compressing time was necessary due to a longer curing time required.

Plywood products prepared with the different adhesives were tested according to EN 314-1:2004 and to EN 314-2: 1993 (confirmed in 2013) European Standards for bonding properties and EN 636:2012+A1:2015 European Standard or according to the Toxic Substances Control Act (TSCA) of the United States for formaldehyde emissions, as indicated in Table 4 below.

The properties of the plywood obtained with the different adhesives are detailed in the following table:

Table 4 - Plywood properties

| Plywood | A | B | C | Comp D |
|---|---|---|---|---|
| Adhesive | A | B | C | Comp D |
| Adhesive amount | 190 g/m$^2$ | 185 g/m$^2$ | 180 g/m$^2$ | 190 g/m$^2$ |
| Plywood thickness | 19 mm | 19 mm | 19 mm | 19 mm |
| Pressure | 0.9 MPa | 0.9 MPa | 0.9 MPa | 0.9 MPa |
| Press temperature | 130 °C | 135 °C | 120 °C | 130 °C |
| Pressing time | 1 min/mm | 1 min/mm | 1.15 min/mm | 1.5 min/mm |
| Bonding quality* | Class III | Class III | Class III | Class III |

(continued)

| Plywood | A | B | C | Comp D |
|---|---|---|---|---|
| Adhesive | A | B | C | Comp D |
| Formaldehyde emissions | E-1[†] TSCA[‡] Title VI Compliant | E-1[†] TSCA[‡] Title VI Compliant | E-1[†] TSCA[‡] Title VI Compliant | E-1[†] TSCA[‡] Title VI Compliant |
| *EN 314-1:2004 and to EN 314-2: 1993 (confirmed in 2013) European Standards [†]EN 636:2012+A1:2015 European Standard [‡]Toxic Substances Control Act (TSCA) of the United States | | | | |

## Claims

1. A resin formulation comprising:

   - a phenol formaldehyde resin

      ◦ having a formaldehyde to phenol molar ratio from 1.8:1 to 2.8:1, and
      ◦ having an average molecular weight (Mw) from 2500 to 4000 Da and a molecular weight distribution from 100 to 25000 Da,
      wherein from 7 to 10 wt.% of the phenol formaldehyde resin has a Mw above 8000 Da and from 25 to 35 wt.% of the phenol formaldehyde resin has a Mw from 1000 to 4000 Da, as determined by gel permeation chromatography (GPC);

   wherein the resin formulation has a solids content from 45 to 60 wt.%, based on the total weight of resin formulation and a) a viscosity from 0.5 Pa*s to 0.7 Pa*s measured at 25 °C using a viscometer.

2. The resin formulation of claim 1 wherein resin formulation comprises a surfactant mixture, in particular from 1 to 3 wt.% of surfactant mixture based on the total amount of phenol formaldehyde resin, wherein the surfactant mixture comprises an anionic surfactant and a non-ionic surfactant.

3. The resin formulation of claim 1 or claim 2 wherein resin formulation comprises from 40 to 50 wt.% of an aqueous solvent based on the total amount of phenol formaldehyde resin, said aqueous solvent comprising 90 to 98 wt.% of water and 2 to 10 wt.% of a C1-C3 linear or branched alcohol, based on the total weight of aqueous solvent.

4. The resin formulation of any one of claims 1-3 having at least one of

   b) a pH from 10 to 13;
   c) a free-formaldehyde content of less than 0.1 wt.%, as determined according to ISO 11402:2004;
   d) a residual phenol content of less than 1 wt.% as determined according to ISO 8974:2002; and
   e) a curing time at 100 °C of 15-30 minutes as determined according to ISO 9396:1997, in particular having all of a), b), c), d) and e).

5. The resin formulation of any one of claims 1-4 wherein the phenol formaldehyde resin has content from 0 to 10 wt.% of urea based on the total amount of phenol formaldehyde resin, in particular from 1 to 5 wt.% of urea.

6. The resin formulation of any one of claims 1 to 5, wherein the formaldehyde to phenol molar ratio is from 2.0:1 to 2.5:1.

7. The resin formulation of any one of claims 2 to 6, wherein the anionic surfactant of the surfactant mixture is a salified alkyl phosphate and/or the non-ionic surfactant of the surfactant mixture is a glycol ether.

8. The resin formulation of claim 7, wherein

   the salified alkyl phosphate is selected from potassium cetyl phosphate, potassium C9-15 alkyl phosphate, potassium C11-15 alkyl phosphate, potassium C12-13 alkyl phosphate, potassium C12-14 alkyl phosphate, potassium lauryl phosphate, disodium lauryl phosphate, disodium oleyl phosphate, sodium lauryl phosphate, and/or

the glycol ether is a glycol ether of formula $R(OCH_2CH_2)_nOH$ wherein n = 1, 2 or 3 and R is an alkyl group, in particular the glycol ether is selected from 2-(2-butoxy-ethoxy)-ethanol, diethylene glycol monobutyl ether, diethylene glycol monoethyl ether, diethylene glycol monohexyl ether, diethylene glycol monomethyl ether, ethylene glycol monoethyl ether, ethylene glycol monohexyl ether, ethylene glycol monomethyl ether, ethylene glycol monooctyl ether, ethylene glycol monopropyl ether, triethylene glycol monoethyl ether, and triethylene glycol monomethyl ether.

9. The resin formulation of any one of claims 1 - 8 having a number average molecular weight (Mn) from 300 to 650 Da, in particular from 450 to 600 Da and/or a polydispersity index (PDI) from 2.5 to 7, in particular from 3 to 7 and more in particular from 4 to 6.

10. An adhesive comprising

from 50 to 90 wt.% of the resin formulation of any one of claims 1 to 9;
from 10 to 30 wt.% of a filler, said filler comprising from 10 to 90 wt.% of an organic filler and from 90 to 10 wt.% of an inorganic filler; and
from 2 to 25 wt.% of water
wherein the adhesive has a viscosity from 0.5 to 2.0 Pa*s, measured at 25 °C using a viscometer, and
a solids content from 25 to 65 wt.%, the wt.% based on the total amount of adhesive.

11. The adhesive of claim 10 wherein, the organic filler is selected from wheat flour, rye flour, olive stone flour, corn flour, coconut husk flour, wood flour, carbohydroxymethyllcellulose (CMC), xanthan gum and starch; and/or the inorganic filler is selected from calcium carbonate, sodium carbonate, potassium carbonate, chalk, barium sulfate, talcum powder, calcium sulfate and gypsum.

12. The adhesive of any one of claims 10 to 11 wherein the viscosity of the adhesive is from 0.6 to 3 Pa*s, in particular from 0.8 to 2 Pa*s.

13. A process for manufacturing a resin formulation of any one of claims 1 to 9 comprising:

i) condensing formaldehyde and phenol at a condensation temperature from 60 to 90 °C and at a formaldehyde to phenol molar ratio from 1.8:1 to 2.8:1 to provide a phenol formaldehyde resin, wherein from 3.5 to 11.5 wt.% of alkali metal hydroxide is added in three or more separate fractions; wherein the weight percentage (wt.%) is based on the total weight amount of the resin formulation and in the presence of from 1.5 to 2.99 wt.% of a C1-C3 linear or branched alcohol and from 25 to 75 wt.% of water, based on the total weight amount of the resin formulation.

14. The process of claim 13 further comprising
ii) adding to the phenol formaldehyde resin from 1 to 3.0 wt.% of a surfactant mixture comprising an anionic surfactant and a non-ionic surfactant, based on the total weight amount of the resin formulation.

15. The process of any one of claims 13 to 14, comprising adding to the phenol formaldehyde resin from 0 to 10 wt.% of urea, in particular from 1 to 5 wt.% of urea, based on the total weight amount of the resin formulation.

16. The process of any one of claims 13 to 15, wherein condensing (i) comprises:

a) mixing formaldehyde and phenol at a formaldehyde to phenol molar ratio from 1.8:1 to 2.8:1 together with from 1.5 to 2.99 wt.% of a C1-C3 linear or branched alcohol and from 25 to 75 wt.% of water, mixing being performed at a temperature from 30 to 50 °C, to provide a first reaction mixture;
b) cooling the first reaction mixture to a temperature below 30 °C and adding from 1.5 to 3.5 wt.% of an alkali metal hydroxide, to provide a second reaction mixture;
c) heating the second reaction mixture to a temperature from 60 to 90 °C to provide a third reaction mixture, in particular having a viscosity from 0.03 to 0.15 Pa*s;
d) cooling the third reaction mixture by 1 to 10 °C, and adding from 1 to 4 wt.% of the alkali metal hydroxide, to provide a fourth reaction mixture;
e) heating the fourth reaction mixture to a temperature from 60 to 90 °C, to provide a fifth reaction mixture, in particular, having a viscosity from 0.09 to 0.30 Pa*s;

f) cooling the fifth reaction mixture by 5 to 10 °C, and adding from 1 to 4 wt.% of the alkali metal hydroxide, to provide a sixth reaction mixture;

g) heating the sixth reaction mixture to a temperature from 60 to 90 °C, to provide a phenol formaldehyde resin, in particular, having a viscosity from 0.30 to 0.90 Pa*s; and

h) cooling the phenol formaldehyde resin to a temperature from 5 to 40°C,

wherein the weight percentages (wt.%) are based on the total weight amount of the resin formulation and the viscosity is measured at 25 °C using a viscometer.

17. The process of any one of claims 13-16, wherein the alkali metal hydroxide is selected from sodium hydroxide, potassium hydroxide, barium hydroxide, magnesium hydroxide, and zinc hydroxide, or is selected from sodium hydroxide and potassium hydroxide.

18. A process for manufacturing a coated material comprising applying an adhesive of any one of claims 10-12 on to a substrate, wherein the adhesive is applied by curtain coating, to provide a curtain coated substrate.

19. The process of claim 18, further comprising pressing the curtain coated substrate at a temperature from 80 to 160°C, in particular from 90 to 150°C and more in particular from 100 to 140°C, and at a pressure from 0.4 to 2.0 MPa for a length of time from 0.4 to 3 minutes per mm of total thickness of the curtain coated substrate being pressed.

20. The process of any one of claims 18-19 wherein the adhesive is applied to an amount from 150 to 280 $g/m^2$.

21. The process of any one of claims 18-20, and wherein the coated material is selected from plywood, veneered board or laminated veneer lumber (LVL).

22. A coated material obtainable by a process of any one of claims 18-21, in particular wherein the coated material is selected from plywood, veneered board or laminated veneer lumber (LVL).

23. A coated material comprising an adhesive according to any one of claims 10-12, in particular wherein the coated material is selected from plywood, veneered board or laminated veneer lumber (LVL).

24. The coated material according to claim 23 wherein the coated material is plywood comprising a plurality of wood veneers adhered by the adhesive according to anyone of claims 10-12, wherein said plywood has a class III bonding quality rating according to EN 314-1:2004 and to EN 314-2: 1993 (confirmed in 2013) European Standards and has an E-1 formaldehyde emissions rating according to EN 636:2012+A1:2015 European Standard, and/or is Title VI compliant according to the Toxic Substances Control Act (TSCA) of the United States, and/or has a three star rating or four star rating according to the Japanese Industrial Standard JIS 1460:2015.

**Patentansprüche**

1. Harzformulierung, umfassend:

ein Phenol-Formaldehyd-Harz

mit einem molaren Verhältnis von Formaldehyd zu Phenol von 1,8:1 bis 2,8:1 und
mit einem durchschnittlichen Molekulargewicht (Mw) von 2500 bis 4000 Da und einer Molekulargewichtsverteilung von 100 bis 25000 Da,
wobei 7 bis 10 Gew.-% des Phenol-Formaldehyd-Harzes ein Mw von über 8000 Da und 25 bis 35 Gew.-% des Phenol-Formaldehyd-Harzes ein Mw von 1000

bis 4000 Da aufweisen, bestimmt durch Gelpermeationschromatographie (GPC); wobei die Harzformulierung einen Gehalt von Feststoffen von 45 bis 60 Gew.-%, bezogen auf das Gesamtgewicht der Harzformulierung, und a) eine Viskosität von 0,5 Pa*s bis 0,7 Pa*s, gemessen bei 25 °C unter Verwendung eines Viskosimeters, aufweist.

2. Harzformulierung nach Anspruch 1, wobei die Harzformulierung eine Tensidmischung umfasst, insbesondere 1 bis 3 Gew.-% Tensidmischung, bezogen auf die Gesamtmenge an Phenol-Formaldehyd-Harz, wobei die Tensidmischung ein anionisches Tensid und ein nichtionisches Tensid umfasst.

3. Harzformulierung nach Anspruch 1 oder 2, wobei die Harzformulierung 40 bis 50 Gew.-% eines wässrigen Lösungsmittels umfasst, bezogen auf die Gesamtmenge an Phenol-Formaldehyd-Harz, wobei das wässrige Lösungsmittel 90 bis 98 Gew.-% Wasser und 2 bis 10 Gew.-% eines linearen oder verzweigten C1-C3-Alkohols umfasst, bezogen auf das Gesamtgewicht des wässrigen Lösungsmittels.

4. Harzformulierung nach einem der Ansprüche 1-3, aufweisend mindestens eines von:

   b) einen pH-Wert von 10 bis 13;
   c) einen Gehalt an freiem Formaldehyd von weniger als 0,1 Gew.-%, bestimmt gemäß ISO 11402:2004;
   d) einen Restphenolgehalt von weniger als 1 Gew.-%, bestimmt gemäß ISO 8974:2002; und
   e) eine Aushärtungszeit bei 100 °C von 15 bis 30 Minuten, bestimmt gemäß ISO 9396:1997, insbesondere mit allen von a), b), c), d) und e).

5. Harzformulierung nach einem der Ansprüche 1-4, wobei das Phenol-Formaldehyd-Harz aufweist einen Gehalt von 0 bis 10 Gew.-% Harnstoff, bezogen auf die Gesamtmenge an Phenol-Formaldehyd-Harz, insbesondere von 1 bis 5 Gew.-% Harnstoff.

6. Harzformulierung nach einem der Ansprüche 1 bis 5, wobei das Molverhältnis von Formaldehyd zu Phenol 2,0:1 bis 2,5:1 beträgt.

7. Harzformulierung nach einem der Ansprüche 2 bis 6, wobei das anionische Tensid der Tensidmischung ein in ein Salz überführtes Alkylphosphat ist und / oder das nichtionische Tensid der Tensidmischung ein Glykolether ist.

8. Harzformulierung nach Anspruch 7, wobei

   das in ein Salz überführte Alkylphosphat ausgewählt ist aus Kaliumcetylphosphat, Kalium-C9-15-alkylphosphat, Kalium-C11-15-alkylphosphat, Kalium-C12-13-alkylphosphat, Kalium-C12-14-alkylphosphat, Kaliumlaurylphosphat, Dinatriumlaurylphosphat, Dinatriumoleylphosphat, Natriumlaurylphosphat und/oder
   der Glykolether ein Glykolether der Formel $R(OCH_2CH_2)_nOH$ ist, wobei n = 1, 2 oder 3 und R eine Alkylgruppe ist, insbesondere der Glykolether ausgewählt ist aus 2-(2-Butoxyethoxy)ethanol, Diethylenglykolmonobutylether, Diethylenglykolmonoethylether, Diethylenglykolmonohexylether, Diethylenglykolmonomethylether, Ethylenglykolmonoethylether, Ethylenglykolmonohexylether, Ethylenglykolmonomethylether, Ethylenglykolmonooctylether, Ethylenglykolmonopropylether, Triethylenglykolmonoethylether und Triethylenglykolmonomethylether.

9. Harzformulierung nach einem der Ansprüche 1-8, aufweisend ein zahlenmittleres Molekulargewicht (Mn) von 300 bis 650 Da, insbesondere von 450 bis 600 Da, und / oder einen Polydispersitätsindex (PDI) von 2,5 bis 7, insbesondere von 3 bis 7 und insbesondere von 4 bis 6.

10. Haftmittel, umfassend

   50 bis 90 Gew.-% der Harzformulierung nach einem der Ansprüche 1 bis 9;
   10 bis 30 Gew.-% eines Füllstoffs, wobei der Füllstoff 10 bis 90 Gew.-% eines organischen Füllstoffs und 90 bis 10 Gew.-% eines anorganischen Füllstoffs umfasst; und
   2 bis 25 Gew.-% Wasser,
   wobei das Haftmittel eine Viskosität von 0,5 bis 2,0 Pa*s, gemessen bei 25 °C unter Verwendung eines Viskosimeters, und
   einen Gehalt von Feststoffen von 25 bis 65 Gew.-% aufweist, wobei die Gew.-% auf die Gesamtmenge des Haftmittels bezogen sind.

11. Haftmittel nach Anspruch 10, wobei der organische Füllstoff ausgewählt ist aus Weizenmehl, Roggenmehl, Olivenkernmehl, Maismehl, Kokosnussschalenmehl, Holzmehl, Carbohydroxymethyllcellulose (CMC), Xanthangummi und Stärke; und / oder der anorganische Füllstoff ausgewählt ist aus Calciumcarbonat, Natriumcarbonat, Kaliumcarbonat, Kreide, Bariumsulfat, Talkumpuder, Calciumsulfat und Gips.

12. Haftmittel nach einem der Ansprüche 10 bis 11, wobei die Viskosität des Haftmittels 0,6 bis 3 Pa*s, insbesondere 0,8 bis 2 Pa*s, beträgt.

13. Verfahren zur Herstellung einer Harzformulierung nach einem der Ansprüche 1 bis 9, umfassend:

    i) Kondensieren von Formaldehyd und Phenol bei einer Kondensationstemperatur von 60 bis 90 °C und bei einem molaren Verhältnis von Formaldehyd zu Phenol von 1,8:1 bis 2,8:1, um ein Phenol-Formaldehyd-Harz bereitzustellen, wobei 3,5 bis 11, 5 Gew.-% Alkalimetallhydroxid in drei oder mehr getrennten Fraktionen zugegeben werden; wobei der Gewichtsprozentsatz (Gew.-%) auf die Gesamtgewichtsmenge der Harzformulierung bezogen ist und in der Gegenwart von 1,5 bis 2,99 Gew.-% eines linearen oder verzweigten C1-C3-Alkohols und 25 bis 75 Gew.-% Wasser, bezogen auf die Gesamtgewichtsmenge der Harzformulierung.

14. Verfahren nach Anspruch 13, ferner umfassend
ii) Zugabe von 1 bis 3,0 Gew.-% einer Tensidmischung, die ein anionisches Tensid und ein nichtionisches Tensid umfasst, zu dem Phenol-Formaldehyd-Harz, bezogen auf die Gesamtgewichtsmenge der Harzformulierung.

15. Verfahren nach einem der Ansprüche 13 bis 14, umfassend die Zugabe von 0 bis 10 Gew.-% Harnstoff, insbesondere von 1 bis 5 Gew.-% Harnstoff, bezogen auf die Gesamtgewichtsmenge der Harzformulierung, zu dem Phenol-Formaldehyd-Harz.

16. Verfahren nach einem der Ansprüche 13 bis 15, wobei Kondensieren (i) umfasst:

    a) Mischen von Formaldehyd und Phenol bei einem molaren Verhältnis von Formaldehyd zu Phenol von 1,8:1 bis 2,8:1 zusammen mit 1,5 bis 2,99 Gew.-% eines linearen oder verzweigten C1-C3-Alkohols und 25 bis 75 Gew.-% Wasser, wobei Mischen bei einer Temperatur von 30 bis 50 °C durchgeführt wird, um eine erste Reaktionsmischung bereitzustellen;
    b) Abkühlen der ersten Reaktionsmischung auf eine Temperatur unter 30 °C und Zugabe von 1,5 bis 3,5 Gew.-% eines Alkalimetallhydroxids, um eine zweite Reaktionsmischung bereitzustellen;
    c) Erhitzen der zweiten Reaktionsmischung auf eine Temperatur von 60 bis 90 °C, um eine dritte Reaktionsmischung bereitzustellen, die insbesondere eine Viskosität von 0,03 bis 0,15 Pa*s aufweist;
    d) Abkühlen der dritten Reaktionsmischung um 1 bis 10 °C und Zugabe von 1 bis 4 Gew.-% des Alkalimetallhydroxids, um eine vierte Reaktionsmischung bereitzustellen;
    e) Erhitzen der vierten Reaktionsmischung auf eine Temperatur von 60 bis 90 °C, um eine fünfte Reaktionsmischung bereitzustellen, die insbesondere eine Viskosität von 0,09 bis 0,30 Pa*s aufweist;
    f) Abkühlen der fünften Reaktionsmischung um 5 bis 10 °C und Zugabe von 1 bis 4 Gew.-% des Alkalimetallhydroxids, um eine sechste Reaktionsmischung bereitzustellen;
    g) Erhitzen der sechsten Reaktionsmischung auf eine Temperatur von 60 bis 90 °C, um ein Phenol-Formaldehyd-Harz bereitzustellen, die insbesondere eine Viskosität von 0,30 bis 0,90 Pa*s aufweist; und
    h) Abkühlen des Phenol-Formaldehyd-Harzes auf eine Temperatur von 5 bis 40 °C,

wobei die Gewichtsprozente (Gew.-%) auf die Gesamtgewichtsmenge der Harzformulierung bezogen sind und die Viskosität bei 25 °C unter Verwendung eines Viskosimeters gemessen wird.

17. Verfahren nach einem der Ansprüche 13-16, wobei das Alkalimetallhydroxid aus Natriumhydroxid, Kaliumhydroxid, Bariumhydroxid, Magnesiumhydroxid und Zinkhydroxid ausgewählt ist oder aus Natriumhydroxid und Kaliumhydroxid ausgewählt ist.

18. Verfahren zur Herstellung eines beschichteten Materials, umfassend Aufbringen eines Haftmittels nach einem der Ansprüche 10-12 auf ein Substrat, wobei das Haftmittel durch Vorhangbeschichtung aufgebracht wird, um ein vorhangbeschichtetes Substrat bereitzustellen.

19. Verfahren nach Anspruch 18, ferner umfassend Pressen des vorhangbeschichteten Substrats bei einer Temperatur von 80 bis 160 °C, insbesondere von 90 bis 150 °C und insbesondere von 100 bis 140 °C, und bei einem Druck von 0,4 bis 2,0 MPa für eine Zeitdauer von 0,4 bis 3 Minuten pro mm Gesamtdicke des vorhangbeschichteten Substrats, das gepresst wird.

20. Verfahren nach einem der Ansprüche 18-19, wobei das Haftmittel in einer Menge von 150 bis 280 g/m$^2$ aufgebracht wird.

21. Verfahren nach einem der Ansprüche 18-20, und wobei das beschichtete Material aus Sperrholz, furnierter Platte oder Furnierschichtholz (LVL) ausgewählt ist.

**22.** Beschichtetes Material, erhältlich durch ein Verfahren nach einem der Ansprüche 18-21, insbesondere wobei das beschichtete Material aus Sperrholz, furnierter Platte oder Furnierschichtholz (LVL) ausgewählt ist.

**23.** Beschichtetes Material, umfassend ein Haftmittel gemäß einem der Ansprüche 10-12, insbesondere wobei das beschichtete Material aus Sperrholz, furnierter Platte oder Furnierschichtholz (LVL) ausgewählt ist.

**24.** Beschichtetes Material nach Anspruch 23, wobei das beschichtete Material Sperrholz ist, umfassend eine Vielzahl von Holzfurnieren, die durch das Haftmittel nach einem der Ansprüche 10-12 angehaftet sind, wobei das Sperrholz eine Klebequalitätsbewertung Klasse III nach Europäischen Normen EN 314-1:2004 und EN 314-2:1993 (bestätigt 2013) aufweist und eine E-1-Bewertung der Formaldehydemissionen nach Europäischer Norm EN 636:2012+A1:2015 aufweist und / oder Titel VI konform nach dem Toxic Substances Control Act (TSCA) der Vereinigten Staaten ist und / oder eine Drei-Sterne-Bewertung oder Vier-Sterne-Bewertung nach dem Japanese Industrial Standard JIS 1460: 2015 aufweist.

**Revendications**

**1.** Formulation de résine comprenant :

- une résine de phénol-formaldéhyde

o ayant un rapport molaire du formaldéhyde au phénol de 1,8/1 à 2,8/1, et
o ayant une masse moléculaire moyenne (Mw) de 2 500 à 4 000 Da et une distribution des masses moléculaires de 100 à 25 000 Da,
dans laquelle 7 à 10 % en poids de la résine de phénol-formaldéhyde ont une Mw supérieure à 8 000 Da et 25 à 35 % en poids de la résine de phénol-formaldéhyde ont une Mw de 1 000 à 4 000 Da, comme déterminé par chromatographie d'exclusion diffusion (GPC) ;

laquelle formulation de résine a une teneur en solides de 45 à 60 % en poids par rapport au poids total de la formulation de résine et a) une viscosité de 0,5 Pa*s à 0,7 Pa*s mesurée à 25 °C au moyen d'un viscosimètre.

**2.** Formulation de résine selon la revendication 1, laquelle formulation de résine comprend un mélange de tensioactifs, en particulier 1 à 3 % en poids d'un mélange de tensioactifs, par rapport à la quantité totale de résine de phénol-formaldéhyde, dans laquelle le mélange de tensioactifs comprend un tensioactif anionique et un tensioactif non-ionique.

**3.** Formulation de résine selon la revendication 1 ou la revendication 2, laquelle formulation de résine comprend 40 à 50 % en poids d'un solvant aqueux, par rapport à la quantité totale de résine de phénol-formaldéhyde, ledit solvant aqueux comprenant 90 à 98 % en poids d'eau et 2 à 10 % en poids d'un alcool linéaire ou ramifié en C1 à C3, par rapport au poids total du solvant aqueux.

**4.** Formulation de résine selon l'une quelconque des revendications 1 à 3, ayant au moins l'un parmi

b) un pH de 10 à 13 ;
c) une teneur en formaldéhyde libre inférieure à 0,1 % en poids, telle que déterminée conformément à la norme ISO 11402:2004 ;
d) une teneur en phénol résiduel inférieure à 1 % en poids, telle que déterminée conformément à la norme ISO 8974:2002 ; et
e) un temps de durcissement à 100 °C de 15 à 30 minutes, tel que déterminé conformément à la norme ISO 9396:1997,
en particulier ayant tous parmi a), b), c), d) et e).

**5.** Formulation de résine selon l'une quelconque des revendications 1 à 4, dans laquelle la résine de phénol-formaldéhyde a une teneur en urée de 0 à 10 % en poids, en particulier en urée de 1 à 5 % en poids, par rapport à la quantité totale de résine de phénol-formaldéhyde.

**6.** Formulation de résine selon l'une quelconque des revendications 1 à 5, dans laquelle le rapport molaire du formaldéhyde au phénol est de 2,0/1 à 2,5/1.

7. Formulation de résine selon l'une quelconque des revendications 2 à 6, dans laquelle le tensioactif anionique du mélange de tensioactifs est un alkylphosphate salifié et/ou le tensioactif non-ionique du mélange de tensioactifs est un éther de glycol.

8. Formulation de résine selon la revendication 7, dans laquelle

l'alkylphosphate salifié est choisi parmi le cétylphosphate de potassium, un (alkyle en $C_9$ à $C_{15}$)phosphate de potassium, un (alkyle en $C_{11}$ à $C_{15}$)phosphate de potassium, un (alkyle en $C_{12}$ à $C_{13}$)phosphate de potassium, un (alkyle en $C_{12}$ à $C_{14}$)phosphate de potassium, le laurylphosphate de potassium, le laurylphosphate disodique, l'oléylphosphate disodique, le laurylphosphate de sodium, et/ou
l'éther de glycol est un éther de glycol de formule $R(OCH_2CH_2)_nOH$ dans laquelle n = 1, 2 ou 3 et R est un groupe alkyle, en particulier l'éther de glycol est choisi parmi le 2-(2-butoxyéthoxy)éthanol, l'éther monobutylique de diéthylèneglycol, l'éther monoéthylique de diéthylèneglycol, l'éther monohexylique de diéthylèneglycol, l'éther monométhylique de diéthylèneglycol, l'éther monoéthylique d'éthylèneglycol, l'éther monohexylique d'éthylèneglycol, l'éther monométhylique d'éthylèneglycol, l'éther monooctylique d'éthylèneglycol, l'éther monopropylique d'éthylèneglycol, l'éther monoéthylique de triéthylèneglycol, et l'éther monométhylique de triéthylèneglycol.

9. Formulation de résine selon l'une quelconque des revendications 1 à 8, ayant une masse moléculaire moyenne en nombre (Mn) de 300 à 650 Da, en particulier de 450 à 600 Da et/ou un indice de polydispersité (PDI) de 2,5 à 7, en particulier de 3 à 7 et plus particulièrement de 4 à 6.

10. Adhésif comprenant

50 à 90 % en poids de la formulation de résine de l'une quelconque des revendications 1 à 9 ;
10 à 30 % en poids d'une charge, ladite charge comprenant 10 à 90 % en poids d'une charge organique et 90 à 10 % en poids d'une charge inorganique ; et
2 à 25 % en poids d'eau
lequel adhésif a une viscosité de 0,5 à 2,0 Pa*s, mesurée à 25 °C au moyen d'un viscosimètre, et
une teneur en solides de 25 à 65 % en poids, les pourcentages en poids étant basés sur la quantité totale d'adhésif.

11. Adhésif selon la revendication 10, dans lequel la charge organique est choisie parmi la farine de blé, la farine de seigle, la farine de noyau d'olive, la farine de maïs, la farine de cosse de noix de coco, la farine de bois, la carbohydroxyméthylcellulose (CMC), la gomme xanthane et l'amidon ; et/ou la charge inorganique est choisie parmi le carbonate de calcium, le carbonate de sodium, le carbonate de potassium, la craie, le sulfate de baryum, la poudre de talc, le sulfate de calcium et le gypse.

12. Adhésif selon l'une quelconque des revendications 10 et 11, dans lequel la viscosité de l'adhésif est de 0,6 à 3 Pa*s, en particulier de 0,8 à 2 Pa*s.

13. Procédé pour fabriquer une formulation de résine de l'une quelconque des revendications 1 à 9, comprenant :

i) la condensation de formaldéhyde et de phénol à une température de condensation de 60 à 90 °C et à un rapport molaire du formaldéhyde au phénol de 1,8/1 à 2,8/1 pour donner une résine de phénol-formaldéhyde, dans laquelle 3,5 à 11,5 % en poids d'hydroxyde de métal alcalin sont ajoutés en trois ou plus de trois fractions séparées ; dans laquelle le pourcentage en poids (% en poids) est basé sur la quantité en poids totale de la formulation de résine et en présence de 1,5 à 2,99 % en poids d'un alcool linéaire ou ramifié en C1 à C3 et de 25 à 75 % en poids d'eau, par rapport à la quantité en poids totale de la formulation de résine.

14. Procédé selon la revendication 13, comprenant en outre
ii) l'addition à la résine de phénol-formaldéhyde de 1 à 3,0 % en poids d'un mélange de tensioactifs comprenant un tensioactif anionique et un tensioactif non-ionique, par rapport à la quantité en poids totale de la formulation de résine.

15. Procédé selon l'une quelconque des revendications 13 et 14, comprenant l'addition à la résine de phénol-formaldéhyde de 0 à 10 % en poids d'urée, en particulier de 1 à 5 % en poids d'urée, par rapport à la quantité en poids totale de la formulation de résine.

16. Procédé selon l'une quelconque des revendications 13 à 15, dans lequel la condensation (i) comprend :

a) le mélange de formaldéhyde et de phénol à un rapport molaire du formaldéhyde au phénol de 1,8/1 à 2,8/1 conjointement avec 1,5 à 2,99 % en poids d'un alcool linéaire ou ramifié en C1 à C3 et 25 à 75 % en poids d'eau, le mélange étant effectué à une température de 30 à 50 °C, pour donner un premier mélange réactionnel ;

b) le refroidissement du premier mélange réactionnel à une température inférieure à 30 °C et l'addition de 1,5 à 3,5 % en poids d'un hydroxyde de métal alcalin, pour donner un deuxième mélange réactionnel ;

c) le chauffage du deuxième mélange réactionnel à une température de 60 à 90 °C pour donner un troisième mélange réactionnel, en particulier ayant une viscosité de 0,03 à 0,15 Pa*s ;

d) le refroidissement du troisième mélange réactionnel de 1 à 10 °C, et l'addition de 1 à 4 % en poids de l'hydroxyde de métal alcalin, pour donner un quatrième mélange réactionnel ;

e) le chauffage du quatrième mélange réactionnel à une température de 60 à 90 °C, pour donner un cinquième mélange réactionnel, en particulier ayant une viscosité de 0,09 à 0,30 Pa*s ;

f) le refroidissement du cinquième mélange réactionnel de 5 à 10 °C, et l'addition de 1 à 4 % en poids de l'hydroxyde de métal alcalin, pour donner un sixième mélange réactionnel ;

g) le chauffage du sixième mélange réactionnel à une température de 60 à 90 °C, pour donner une résine de phénol-formaldéhyde, en particulier ayant une viscosité de 0,30 à 0,90 Pa*s ; et

h) le refroidissement de la résine de phénol-formaldéhyde à une température de 5 à 40°C,

dans lequel les pourcentages en poids (% en poids) sont basés sur la quantité en poids totale de la formulation de résine, et la viscosité est mesurée à 25 °C au moyen d'un viscosimètre.

17. Procédé selon l'une quelconque des revendications 13 à 16, dans lequel l'hydroxyde de métal alcalin est choisi parmi l'hydroxyde de sodium, l'hydroxyde de potassium, l'hydroxyde de baryum, l'hydroxyde de magnésium, et l'hydroxyde de zinc, ou est choisi parmi l'hydroxyde de sodium et l'hydroxyde de potassium.

18. Procédé pour fabriquer un matériau revêtu, comprenant l'application d'un adhésif de l'une quelconque des revendications 10 à 12 sur un substrat, dans lequel l'adhésif est appliqué par revêtement au rideau, pour donner un substrat revêtu au rideau.

19. Procédé selon la revendication 18, comprenant en outre le pressage du substrat revêtu au rideau à une température de 80 à 160 °C, en particulier de 90 à 150 °C et plus particulièrement de 100 à 140 °C, et sous une pression de 0,4 à 2,0 MPa, pendant une période de temps de 0,4 à 3 minutes par mm d'épaisseur totale du substrat revêtu au rideau qui est pressé.

20. Procédé selon l'une quelconque des revendications 18 et 19, dans lequel l'adhésif est appliqué en une quantité de 150 à 280 g/m$^2$.

21. Procédé selon l'une quelconque des revendications 18 à 20, dans lequel le matériau revêtu est choisi parmi un contreplaqué, un panneau plaqué ou un bois en placage stratifié (LVL).

22. Matériau revêtu pouvant être obtenu par un procédé de l'une quelconque des revendications 18 à 21, en particulier lequel matériau revêtu est choisi parmi un contreplaqué, un panneau plaqué ou un bois en placage stratifié (LVL).

23. Matériau revêtu comprenant un adhésif selon l'une quelconque des revendications 10 à 12, en particulier lequel matériau revêtu est choisi parmi un contreplaqué, un panneau plaqué ou un bois en placage stratifié (LVL).

24. Matériau revêtu selon la revendication 23, lequel matériau revêtu est un contreplaqué comprenant une pluralité de placages de bois collés par l'adhésif selon l'une quelconque des revendications 10 à 12, dans lequel ledit contreplaqué a une note de qualité de collage de classe III conformément aux normes européennes EN 314-1:2004 et EN 314-2:1993 (confirmation de 2013) et a une note d'émissions de formaldéhyde E-1 conformément à la norme européenne EN 636:2012+A1:2015 et/ou se conforme au Titre VI selon le Toxic Substances Control Act (TSCA) des Etats-Unis, et/ou a une note de trois étoiles ou une note de quatre étoiles conformément à la norme industrielle japonaise JIS 1460:2015.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1075893 A
- US 4758478 A
- US 5074946 A
- CA 1076730 A1
- US 2005257888 A1
- US 3931070 A